# EUROPÄISCHE PATENTSCHRIFT

(11) **EP 4 323 143 B1**
(45) Veröffentlichungstag und Bekanntmachung des Hinweises auf die Patenterteilung: **26.03.2025**
(21) Anmeldenummer: 22721329.5
(22) Anmeldetag: 07.04.2022
(51) Int. Cl.: B23K 26/22, B23K 26/32, H02K 15/00, B23K 101/36, B23K 101/38, B23K 103/10

(54) **VERFAHREN ZUM VERSCHWEISSEN VON METALLHALTIGEN, GEBOGENEN STABLEITERN, MIT INTENSITÄTSUMVERTEILUNG IN EINER ANFANGSPHASE UND EINER ENDPHASE**
METHOD FOR LASER WELDING CURVED METAL-CONTAINING BAR CONDUCTORS WITH AN INTENSITY REDISTRIBUTION IN A STARTING PHASE AND AN END PHASE
PROCÉDÉ DE SOUDAGE AU LASER DE BARRES CONDUCTRICES INCURVÉES CONTENANT DE L'ALUMINIUM, EN PARTICULIER POUR UN MOTEUR ÉLECTRIQUE

(30) Priorität: 16.04.2021 DE 102021109623
(43) Veröffentlichungstag der Anmeldung: 21.02.2024
(73) Patentinhaber: TRUMPF Laser- und Systemtechnik SE, 71254 Ditzingen (DE)
(72) Erfinder: BOCKSROCKER, Oliver, 74343 Sachsenheim (DE); SPEKER, Nicolai, 74385 Pleidelsheim (DE); HESSE, Tim, 71254 Ditzingen (DE); BERANEK, Matthias, 70437 Stuttgart (DE)
(74) Vertreter: Trumpf Patentabteilung
(86) Internationale Anmeldenummer: PCT/EP2022/059224
(87) Internationale Veröffentlichungsnummer: WO 2022/218804

(56) Entgegenhaltungen:
- DE-A1- 19 959 902
- FR-A1- 3 098 745
- JP-A- 2013 016 366
- JP-A- 2014 238 387

## Beschreibung

Die Erfindung betrifft ein Verfahren zum Laserschweißen von Stableitern, bevorzugt gebogenen Stableitern, insbesondere von Hairpins für einen Elektromotor oder einen elektrischen Generator,
wobei die Stableiter aus einem aluminiumhaltigen Stableitermaterial mit einem Gehalt von wenigstens 75 Gew% Aluminium, bevorzugt wenigstens 90 Gew% Aluminium, bestehen,
wobei zwei Stableiter teilweise überlappend und nebeneinander liegend angeordnet werden und mittels eines Bearbeitungs-Laserstrahls miteinander verschweißt werden, wobei sich an einer gemeinsamen Basisfläche der nebeneinander liegenden Stableiter eine Schweißperle ausbildet, durch die die Stableiter miteinander verbunden werden,
insbesondere wobei die gemeinsame Basisfläche horizontal ausgerichtet ist.

Ein solches Verfahren ist durch die Internetveröffentlichung "STATOR HAIRPINS AUS ALUMINIUM ENTLACKEN UND SCHWEIßEN - GROßES EINSPARPOTENZIAL" der Firma Clean-Lasersysteme, Herzogenrath (Nordrhein-Westfalen, DE) bekannt geworden, vgl. https://www.cleanlaser.de/de/news/hairpins-aluminium/ vom 05.03.2021.

Ganz allgemein sind weitere Aspekte im Zusammenhang mit dem Verschweißen von metallischen Leiterelementen beispielsweise aus der FR 3 098 745 A1 (offenbarend den Oberbegriff des Anspruchs 1), der JP 2013 016366 A, der DE 199 59 902 A1 und der JP 2014 238387 A bekannt.

In der Fertigung von Elektromotoren oder elektronischen Generatoren werden neben gewickelten Statoren heutzutage auch Statoren eingesetzt, die aus metallischen, meist gebogenen, stabförmigen Leitern ("Stableitern"), insbesondere aus so genannten Hairpins, aufgebaut sind. Die Stableiter werden so angeordnet, dass sie einer vorgesehenen elektrischen Verschaltung entsprechen und dann miteinander verschweißt, um auf diese Weise einen Elektromagneten aufzubauen. Die Hairpintechnologie ermöglicht im Gegensatz zum gewickelten Stator Vorteile beim Gewicht, bei den Kosten und bei der Effizienz.

Die Stableiter werden dabei häufig mit Hilfe eines Laserstrahls verschweißt. Hierzu wird der Laserstrahl typischerweise auf die endseitigen Stirnflächen zweier überlappender, häufig aneinander anliegender Stableiter gerichtet. Dadurch wird Wärme in die Stableiter eingebracht, die Stableiter schmelzen auf und nach dem Erstarren sind die Stableiter über eine erstarrte Schweißperle miteinander verbunden.

Bei der Verschweißung muss eine ausreichend große Querschnittsfläche erzeugt werden, durch die der elektrische Strom zwischen den zwei Stableitern fließen kann. Bei nicht korrekt ausgeführter Verschweißung kann es im Betrieb zu einer ohmschen Erwärmung, einer Einbuße im Wirkungsgrad oder einer unbrauchbaren elektrodynamischen Maschine kommen.

Bisher wurden hauptsächlich Stableiter aus Kupfer verwendet. Ein Beispiel für die Verschweißung von kupferhaltigen Stableitern ist aus der nachveröffentlichten deutschen Patentanmeldung 10 2020 113 179.8 bekannt geworden.

Die Firma Clean-Lasersysteme schlägt auf der oben genannten Internetveröffentlichung vor, Hairpins aus Aluminium anstatt Kupfer direkt zu bearbeiten. Dazu werden die Hairpins aus Aluminium im Vakuum miteinander verschweißt. Die Verwendung der Hairpins aus Aluminium soll insbesondere Kostenvorteile bieten. Weitere Einzelheiten zum Verfahren werden nicht erwähnt.

Das Verschweißen vorn Hairpins aus Aluminium erweist sich jedoch in der Praxis als schwierig. Die durch einen Laserstrahl erzeugte Schweißperle kann während des Schweißvorgangs leicht verlaufen, so dass oftmals keine ausreichende Querschnittsfläche für die Stromleitung erhalten wird, und die Verschweißung unbrauchbar ist.

### Aufgabe der Erfindung

Es ist die Aufgabe der vorliegenden Erfindung, ein Verfahren zum Laserschweißen von Stableitern aus einer aluminiumhaltigen Legierung zur Verfügung zu stellen, um eine brauchbare Verschweißung mit hoher Zuverlässigkeit zu erzeugen, und insbesondere eine ausreichend große Querschnittsfläche für die Stromleitung zuverlässig zu erreichen.

### Beschreibung der Erfindung

Diese Aufgabe wird erfindungsgemäß gelöst durch ein Verfahren der eingangs genannten Art, das dadurch gekennzeichnet ist, dass beim Laserschweißen der Stableiter der Bearbeitungs-Laserstrahl so geführt wird, und dabei eine Schweißkontur des Bearbeitungs-Laserstrahls relativ zu den Stableitern so platziert und eine Vorschubgeschwindigkeit v des Bearbeitungs-Laserstrahl entlang der Schweißkontur relativ zu den Stableitern so gewählt wird,
- dass während des Laserschweißens der Stableiter die Schweißperle eine nicht-flüssige Oxidhaut aufweist, innerhalb derer sich während des Laserschweißens der Stableiter flüssiges Stableitermaterial ansammelt,
- wobei während des Laserschweißens der Stableiter die nicht-flüssige Oxidhaut lediglich an einer nach oben gerichteten Stirnseite der Schweißperle vom Bearbeitungs-Laserstrahl entsprechend der Schweißkontur partiell aufgebrochen wird,
- und wobei während des Laserschweißens der Stableiter die nicht-flüssige Oxidhaut in einem Mantelbereich der Schweißperle, der sich von der oberen Stirnseite weg nach unten zu den Stableitern hin und um die gesamte Schweißperle herum erstreckt, unverletzt bleibt.

Im Rahmen des erfindungsgemäßen Verfahrens wird vorgeschlagen, durch eine geeignete Prozessführung beim Verschweißen von zwei aluminiumhaltigen Stableitern zu erreichen, dass eine nicht-flüssige Oxidschicht ("Oxidhaut") im Bereich der Prozesszone ausgebildet ist und während des Verfahrens stabil gehalten wird. Unterhalb der Oxidhaut bildet sich dann flüssiges Stableitermaterial aus, welches durch die Oxidhaut in definierter Form einer Schweißperle gehalten wird. Hierdurch kann zuverlässig eine brauchbare Verschweißung erzeugt werden.

Beim Verschweißen von zwei metallhaltigen Stableitern ist die Erzeugung einer formstabilen Schweißperle wichtig, da die Qualität der erhaltenen Schweißperle sich auf die stromleitenden Eigenschaften zwischen den Stableitern auswirkt. Im Vergleich zu Kupfer weist Aluminium bei der Schmelztemperatur eine deutlich geringere Viskosität und Oberflächenspannung auf. Aus diesem Grund neigt die niedrigviskose Schmelze der aluminiumhaltigen Legierung beim Verschweißen dazu, unkontrolliert aus dem Bereich der Prozesszone zu verlaufen, in der geschweißt wird. Dies kann zu einer stark deformierten oder unvollständig ausgebildeten Schweißperle und dadurch zu einer verringerten Querschnittsfläche zwischen den Stableitern führen, in der der elektrische Strom fließen kann.

Die Vorteile, die sich durch die Verwendung aluminiumhaltiger Stableiter ergeben, wie die bereits zuvor erwähnte Kosteneinsparung, aber auch Gewichtseinsparungen (die Dichte von elementarem Kupfer ist mit 8,96 g/cm³ mehr als dreimal so groß als die Dichte von elementarem Aluminium mit 2,7 g/cm³), werden dann möglicherweise durch die Nachteile einer defekten oder zu kleinen Querschnittsfläche zwischen den Stableitern negiert.

Im erfindungsgemäßen Verfahren wird die Prozessführung so gewählt, dass während des Laserschweißens der Stableiter im Bereich der Prozesszone eine nicht-flüssige Oxidschicht ("Oxidhaut") vorhanden ist. Durch die Oxidhaut wird der Nachteil der geringen Viskosität und Oberflächenspannung der Schmelze von aluminiumhaltigen Legierungen umgangen. Die Oxidhaut hält die Schmelze gleichmäßig in Form und bildet einen Mantelbereich ("Mantelfläche"), der die Schmelze nach oben hin ausrichtet und zu den Seiten hin begrenzt. Hierdurch wird eine gleichmäßige Schweißperle erzeugt und verhindert, dass die Schmelze an den Seiten verläuft. Auf die Viskosität und Oberflächenspannung der Schmelze kommt es dann nicht mehr an.

An Luft gelagertes Aluminium bildet spontan eine dünne Aluminiumoxidschicht aus (Selbstpassivierung), die es vor Korrosion schützt. Zu Beginn des Schweißverfahrens ist also das Stableitermaterial bereits von einer Oxidhaut bedeckt, unter der sich flüssige Schmelze bilden und ansammeln kann. Während des Laserschweißens kann die Dicke der Oxidhaut verglichen mit der Dicke der Oxidhaut des zuvor festen Stableiters, insbesondere in Folge der beim Laserschweißen erreichten Temperaturen, anwachsen. Weiterhin kann sich während des Verfahrens an Stellen, wo geschmolzenes Aluminium freiliegt, insbesondere an durch den Bearbeitungs-Laserstrahl aufgebrochenen Stellen in der Oxidhaut, spontan neues Aluminiumoxid ausbilden. Während der Durchführung des Verfahrens bleibt die Oxidhaut zur Begrenzung der sich bildenden bzw. sich vergrößernden Schweißperle im Wesentlichen die ganze Zeit erhalten, unter Nutzung von vor dem Beginn des Laserschweißens vorhandener Oxidhaut und/oder während des Laserschweißens neu gebildeter Oxidhaut.

Die Prozessführung erfolgt im Rahmen der Erfindung in einer Weise, dass die Dynamik der Schmelze begrenzt wird, insbesondere nahe des Mantelbereichs, und verhindert wird, dass sich Risse im Mantelbereich bilden, an denen Schmelze unkontrolliert austreten kann, woraus eine ungleichmäßige Schweißperle resultieren würde. Zur Begrenzung der Schmelzbaddynamik kann der Bearbeitungs-Laserstrahl insbesondere mit einer hinreichend geringen Vorschubgeschwindigkeit die Schweißkontur abfahren. Weiterhin kann zur Vermeidung von Rissen im Mantelbereich der Oxidhaut der Schweißperle die Schweißkontur so gewählt werden, dass sie hinreichend vom Rand der Stableiter (bzw. vom Rand der dem Laserstrahl zugewandten Seite der Stableiter, "Stirnseite") beabstandet ist. Die Stabilität der Oxidhaut wird unter diesen Bedingungen begünstigt.

Im Verlauf des Laserschweißens der Stableiter wird unterhalb der Oxidhaut ein Schmelzbad erzeugt. Dies ist möglich, weil die Schmelztemperatur von elementarem Aluminium mit ≈660 °C deutlich niedriger ist als die Schmelztemperatur von Aluminiumoxid mit ≈2070 °C (je nach atmosphärischen Bedingungen kann durch den Bearbeitungs-Laserstrahl auch eine Dissoziierung von Al₂O₃ anstelle eines Aufschmelzens stattfinden). Das Schmelzbad wird so lange aufgeheizt, bis das gewünschte Volumen an flüssigem Aluminium erreicht wird. Dies stellt sicher, dass die Querschnittsfläche zwischen den Stableitern beim abschließenden Erstarren groß genug wird, um eine ausreichend hohe Stromleitung zu erhalten.

Eine Wechselwirkung des Bearbeitungs-Laserstrahls mit der Oxidhaut findet im Wesentlichen nur in dem Bereich statt, in dem der Bearbeitungs-Laserstrahl auf die Oxidhaut trifft. Der Bearbeitungs-Laserstrahl bricht die Oxidhaut nur entlang seiner Schweißkontur auf, so dass die Schweißkontur eine aufgebrochene (bzw. flüssige) Spur erzeugt, ggf. auch mit einem aufgebrochenen (bzw. flüssigen) Bereich innerhalb der Schweißkontur. Im Übrigen bleibt die Oxidhaut erhalten und hält das aufgeschmolzene Stableitermaterial zusammen und in Form.

Nach Ende der Einwirkung des Bearbeitungs-Laserstrahls kühlt das Schmelzbad ab, welches durch die Oxidhaut weiter in Form gehalten wird. Bei der Erstarrung resultiert dann eine definierte Schweißperle, bei der die verbundenen Stableiter eine ausreichend große Querschnittsfläche aufweisen und eine ausreichend gute Stromleitung gewährleisten. Es wird zuverlässig eine brauchbare Verschweißung erzeugt.

### Bevorzugte Varianten der Erfindung

Bei einer bevorzugten Variante des erfindungsgemäßen Verfahrens ist vorgesehen,
dass die Schweißkontur des Bearbeitungs-Laserstrahls relativ zu den Stableitern so platziert wird, dass für einen kleinsten Abstand d der Schweißkontur von einem äußeren Rand der gemeinsamen Basisfläche und eine Erstreckung L der gemeinsamen Basisfläche entlang der Richtung, in der der kleinste Abstand d liegt, gilt:
d≥0,15*L, bevorzugt d≥0,20*L, besonders bevorzugt d≥0,25*L. Hierbei handelt es sich um in der Praxis bewährte Abstände d, mit denen die Wahrscheinlichkeit von Verletzungen der Oxidhaut insbesondere im Mantelbereich minimiert ist.

Besonders bevorzugt ist eine Variante,
bei der die Schweißkontur des Bearbeitungs-Laserstrahls relativ zu den Stableitern so platziert wird, dass für einen kleinsten Abstand d der Schweißkontur von einem äußeren Rand der gemeinsamen Basisfläche gilt:
d ≥ 0,6 mm, bevorzugt d ≥ 0,8 mm, besonders bevorzugt d ≥ 1,0 mm. Auch hierbei handelt es sich um in der Praxis bewährte Abstände d, mit denen die Wahrscheinlichkeit von Verletzungen der Oxidhaut insbesondere im Mantelbereich minimiert ist.

Bei einer vorteilhaften Variante gilt für die Vorschubgeschwindigkeit v des Bearbeitungs-Laserstrahls entlang der Schweißkontur des Bearbeitungs-Laserstrahls relativ zu den Stableitern:
v ≤ 1600 mm/s, bevorzugt v ≤ 1200 mm/s, besonders bevorzugt v ≤ 800 mm/s. Die Vorschubgeschwindigkeit v wirkt sich auf die Dynamik der erzeugten Schmelze unterhalb der nicht-flüssigen Oxidhaut aus. Mit den angegebenen Vorschubgeschwindigkeiten hat sich in der Praxis eine gute Stabilität der Oxidhaut gezeigt und eine gleichmäßig geformte Schweißperle ausgebildet.

Bevorzugt ist eine Variante, bei der das Laserschweißen in einer sauerstoffhaltigen Atmosphäre stattfindet, insbesondere an Luft. Die sauerstoffhaltige Atmosphäre stabilisiert die Oxidhaut der Schweißperle und erleichtert eine rasche Neubildung von Aluminiumoxid an freiliegender Aluminiumschmelze, etwa in der Spur des Bearbeitungs-Laserstrahls. Zudem ist eine sauerstoffhaltige Atmosphäre leicht einzurichten; insbesondere bei Nutzung von Luft sind keine zusätzlichen Aufbauten nötig.

Bei einer bevorzugten Variante des erfindungsgemäßen Verfahren ist vorgesehen, dass zumindest in einer zeitlich zweiten Hälfte des Laserschweißens der Stableiter der Mantelbereich, in welchem die nicht-flüssige Oxidhaut unverletzt bleibt, sich über wenigstens 3/4 der Höhe der Schweißperle, bevorzugt über wenigstens 9/10 der Höhe der Schweißperle, erstreckt. Dadurch ist die Bildung einer formstabilen und gleichmäßigen Schweißperle mit einer Höhe sichergestellt, die über die zur Verfügung gestellte Querschnittsfläche der Schweißperle eine in der Praxis ausreichende elektrische Stromleitung zwischen den Stableitern einrichtet. Meist erstreckt sich der Mantelbereich praktisch über die gesamte Höhe der Schweißperle.

Bevorzugt ist auch eine Variante, bei der die zwei Stableiter mit Endbereichen parallel zueinander und aneinander liegend angeordnet werden,
insbesondere wobei die Endbereiche der Stableiter flächig aneinander gepresst werden,
dass stirnseitige Endflächen der Stableiter näherungsweise auf gleicher Höhe bezüglich der Richtung einer Längserstreckung der Endbereiche der Stableiter liegen,
und dass der Bearbeitungs-Laserstrahl auf die stirnseitigen Endflächen der Stableiter gerichtet wird, und somit die stirnseitigen Endflächen die gemeinsame Basisfläche bereitstellen, an der sich die Schweißperle ausbildet. Durch die Anordnung der Endflächen auf näherungsweise gleicher Höhe wird erreicht, dass sich an den Endflächen durch den Bearbeitungs-Laserstrahl gebildete jeweilige Schmelze problemlos zu einer gemeinsamen, gleichmäßig geformten (kugeligen) Schweißperle vereinen kann, und insbesondere die gemeinsame Schweißperle keinen Hang ausbilden muss. Durch die aneinander liegenden Endbereiche ist die Gefahr reduziert, dass die Schmelze der gemeinsamen Schweißperle zwischen den Stableitern abfließt. Durch Aneinanderpressen der Endbereiche kann ein verbleibender Spalt zwischen den aneinander liegenden Endbereichen minimiert werden.

Vorteilhaft ist eine Weiterentwicklung dieser Variante, die vorsieht, dass die Endbereiche der Stableiter näherungsweise vertikal nach oben gerichtet sind, insbesondere wobei die stirnseitigen Endflächen näherungsweise horizontal ausgerichtet sind. In dieser Anordnung sind die Endflächen für den Bearbeitungs-Laserstrahl gut zugänglich. Durch die horizontale Ausrichtung der Endflächen wird erreicht, dass die sich bildende Schmelze keine Hangabtriebskraft erfährt, und die Schweißperle stabil liegen kann.

Bevorzugt ist auch eine Weiterentwicklung, bei der der Bearbeitungs-Laserstrahl näherungsweise senkrecht auf die stirnseitigen Endflächen fällt. Dadurch wird eine besonders stabile Dampfkapillare (keyhole) erreicht, und die Schmelzbaddynamik wird vermindert. Die Ausbildung einer definierten Schweißperle ist erleichtert.

Bevorzugt ist eine Variante, die vorsieht,
dass die Stableiter zumindest nahe der gemeinsamen Basisfläche, insbesondere in einem jeweiligen Endbereich, jeweils einen rechteckigen Querschnitt mit Kantenlängen zwischen 0,2 mm und 10 mm, bevorzugt zwischen 1 mm und 8 mm, besonders bevorzugt zwischen 2 mm und 6 mm, aufweisen,
insbesondere wobei bei einem jeweiligen Stableiter eine lange Kantenlänge L₂ doppelt so groß ist wie eine kurze Kantenlänge L_{kurz} und die Querschnitte der beiden Stableiter, die verschweißt werden, gleich sind. Diese Abmessungen sind in der Praxis bewährt, insbesondere für den Bau von Elektromotoren. Typischerweise liegen die langen Kanten der Stableiter aneinander an; hierdurch wird die Querschnittsfläche in der Schweißperle, über die die Stableiter miteinander verbunden werden können, maximiert. Wird die lange Kante doppelt so lang wie die kurze Kante gewählt, so kann mit querschnittsgleichen Stableitern eine quadratische Basisfläche bereitgestellt werde. In diese kann insbesondere mit einer kreisförmigen Schweißkontur die Energie des Bearbeitungs-Laserstrahls besonders gleichmäßig eingebracht werden.

Bevorzugt ist weiterhin eine Variante, die vorsieht, dass ein kleinster Abstand d₂ der Schweißkontur zum äußeren Rand der gemeinsamen Basisfläche in Richtung einer jeweiligen langen Kante zwischen 20% und 40%, bevorzugt zwischen 25% und 35%, der zugehörigen langen Kantenlänge L₂ beträgt, und ein kleinster Abstand d₁ der Schweißkontur zum äußeren Rand der gemeinsamen Basisfläche in Richtung einer jeweiligen kurzen Kante zwischen 20% und 40%, bevorzugt zwischen 25% und 35%, der doppelten kurzen Kantenlänge L₁ beträgt. Hierbei handelt es sich um in der Praxis bewährte Abstände d₂ und d₁, mit denen die Wahrscheinlichkeit von Verletzungen der Oxidhaut insbesondere im Mantelbereich minimiert ist.

Bei einer vorteilhaften Variante weist der Bearbeitungs-Laserstrahl eine Laserleistung P auf, mit
0,5 kW ≤ P ≤ 20 kW,
bevorzugt 2 kW ≤ P ≤ 10 kW,
besonders bevorzugt 4 kW ≤ P ≤ 8 kW,
und/oder dass eine Wellenlänge des Bearbeitungs-Laserstrahls zwischen 400 nm und 1200 nm beträgt. Diese Laserleistungen und Wellenlängen des Bearbeitungs-Laserstrahls haben sich in der Praxis für das erfindungsgemäße Verfahren besonders bewährt. Insbesondere konnte eine gleichmäßige Ausbildung der Schweißperle während des Schweißprozesses erhalten werden.

Besonders bevorzugt ist eine Variante, bei der die Schweißkontur linienförmig, kreisförmig oder elliptisch gewählt ist und während des Laserschweißens der Stableiter mehrfach durchlaufen wird,
insbesondere wobei die Schweißkontur mit einer Scanneroptik erzeugt wird. Durch mehrfaches Durchlaufen der Schweißkontur während des Laserschweißens der Stableiter kann die Energie des Bearbeitungs-Laserstrahls gleichmäßig verteilt werden, und dabei eine praktisch beliebige gewünschte Energiemenge durch eine entsprechende Anzahl von Durchläufen in die Stableiter eingebracht werden. Lokale Überhitzungen werden vermieden. Insgesamt kann eine besonders gleichmäßige Ausbildung der Schweißperle erreicht werden. Mit der Scanneroptik, typischerweise ausgebildet mit einem Spiegel und zwei Piezoaktuatoren, kann die Schweißkontur mit geringem Aufwand auf den Stableitern bzw. der Schweißperle eingerichtet und präzise durchfahren werden, insbesondere auch mit Geschwindigkeiten, die durch mechanisches Verfahren von Werkstück oder Laserkopf nicht oder nur schwierig zu erreichen wären. Die Form der Schweißkontur kann an die Form und Ausrichtung der zu schweißenden Stableiter angepasst werden.

Bevorzugt ist weiterhin eine Variante, bei der als Bearbeitungs-Laserstrahl zumindest zeitweise ein geformter Laserstrahl mit einem Kernanteil und einem Ringanteil, der den Kernanteil ringförmig umgibt, gewählt ist,
insbesondere wobei der geformte Laserstrahl mit einer 2-in-1 Faser erzeugt wird mit einem Kernfaserdurchmesser KFD mit 11 µm ≤ KFD ≤ 300 µm, bevorzugt 50 µm ≤ KFD ≤ 100 µm, und mit einem Ringfaserdurchmesser RFD mit 50 µm ≤ RFD ≤ 1000 µm, bevorzugt 200 µm ≤ RFD ≤ 400 µm. Durch die Verwendung des geformten Laserstrahls kann die Schmelzbaddynamik allgemein verringert werden, und Schweißfehler wie Spritzerbildung oder Porenbildung werden minimiert, insbesondere zu Beginn und zum Ende des Verfahrens. Der Leistungsanteil der Laserleistung im Kernanteil kann zwischen 20% und 100%, bevorzugt zwischen 20% und 80%, besonders bevorzugt zwischen 40% und 60%, gewählt bzw. variiert werden. Die Aufteilung der Laserleistung zwischen Kernanteil und Ringanteil kann, falls gewünscht, über den gesamten Schweißprozess konstant gewählt werden, dann meist mit einem Leistungsanteil Pₖₑᵣₙ im Kernanteil von 40-60%. Alternativ ist es auch möglich, den Leistungsanteil Pₖₑᵣₙ in einer ersten Phase (Anfangsphase), einer Hauptphase und letzten Phase (Endphase) des Laserschweißens der Stableiter unterschiedlich zu wählen. Falls gewünscht, kann in einer Hauptphase des Laserschweißens (zwischen einer Anfangsphase und einer Endphase) ein Leistungsanteil Pₖₑᵣₙ im Kernanteil von 100% gewählt werden, um die Prozessgeschwindigkeit zu erhöhen, und in einer ersten Phase (Anfangsphase) und/oder letzten Phase (Endphase) geringer gewählt und insbesondere kontinuierlich veränderlich gewählt werden, um Schweißfehler zu minimieren.

Bei einer bevorzugten Weiterentwicklung dieser Variante ist während einer zeitlich ersten Phase des Laserschweißens der Stableiter ein Leistungsanteil Pₖₑᵣₙ der Laserleistung im Kernanteil geringer gewählt als während einer Hauptphase des Laserschweißens der Stableiter,
insbesondere wobei der Leistungsanteil Pₖₑᵣₙ der Laserleistung im Kernanteil während der ersten Phase kontinuierlich zunimmt,
insbesondere wobei die erste Phase eine Dauer zwischen 1 ms und 30 ms hat. Beim Einstechen des Bearbeitungs-Laserstrahls (Beginn der Anfangsphase) sorgt der geringer gewählte Leistungsanteil Pₖₑᵣₙ für eine geringere Spritzerbildung und verhindert somit, dass zu Beginn der Anfangsphase bereits größere Mengen flüssiger Schmelze und nicht-flüssiger Oxidhaut aus der Prozesszone geschleudert werden, wodurch die Bildung einer gleichmäßigen Schweißperle erschwert würde. Nach dem Einstechen kann der Leistungsanteil Pₖₑᵣₙ kontinuierlich auf eine gewünschte Leistung für die Hauptphase erhöht werden. Typischerweise umfasst die erste Phase (Anfangsphase) einen Anteil von 10-30% der Gesamtschweißdauer. Im Verlauf der ersten Phase wird die Dampfkapillare ausgebildet. Die erste Phase dauert typischerweise mindestens so lange an, dass die Dampfkapillare wenigstens 30% ihrer maximalen Kapillar-Tiefe während des Laserschweißens der Stableiter erreicht.

Ebenso bevorzugt ist eine Weiterentwicklung, bei der während einer zeitlich letzten Phase des Laserschweißens der Stableiter ein Leistungsanteil Pₖₑᵣₙ der Laserleistung im Kernanteil geringer ist als während einer Hauptphase des Laserschweißens der Stableiter,
insbesondere wobei der Leistungsanteil Pₖₑᵣₙ der Laserleistung im Kernanteil während der letzten Phase kontinuierlich abnimmt,
insbesondere wobei die letzte Phase eine Dauer zwischen 1 ms und 30 ms hat. In der letzten Phase (Endphase) sorgt der geringer gewählte Leistungsanteil Pₖₑᵣₙ dafür, dass sich die Dampfkapillare kontrolliert zurückbilden kann; mit einem kontinuierlich abnehmenden Leistungsanteil Pₖₑᵣₙ kann dabei ein besonders schonende Rückbildung der Dampfkapillare bewirkt werden. Dadurch wird erreicht, dass keine oder nur wenige, kleine Poren innerhalb der Schweißperle entstehen. Dies sorgt für eine zuverlässig brauchbare Verschweißung. Typischerweise umfasst die letzte Phase (Endphase) einen Anteil von 10-30% der Gesamtschweißdauer.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebiger Kombination Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: zeigt in einer schematischen Seitenansicht zwei gebogene Stableiter in teilweise überlappender Anordnung, die im Rahmen der Erfindung miteinander verschweißt werden sollen;
- Fig. 2: zeigt in einer schematische Schrägansicht die aneinander anliegenden Endbereiche der beiden Stableiter von Fig. 1, vor Beginn des erfindungsgemäßen Laserschweißens;
- Fig. 3: zeigt in einer schematischen Seitenansicht die beiden Stableiter von Fig. 2, während des erfindungsgemäßen Laserschweißens, mitsamt einer sich ausbildenden Schweißperle;
- Fig. 4: zeigt eine schematische Aufsicht auf die Endbereiche der beiden Stableiter von Fig. 2;
- Fig. 5: zeigt eine schematische Aufsicht auf die Endbereiche zweier Stableiter in einer Variante, bei der die gemeinsame Basisfläche quadratisch ist;
- Fig. 6a: zeigt eine schematische Darstellung eines geformten Bearbeitungs-Laserstrahls für die Erfindung im Querschnitt, mit Kernanteil und Ringanteil;
- Fig. 6b: zeigt eine schematische Darstellung einer beispielhaften 2-in-1 Faser für die Erfindung im Querschnitt, mit der ein geformter Laserstrahl für das erfindungsgemäße Laserschweißen bereit gestellt werden kann, mit Kernfaser und Ringfaser;
- Fig. 7: zeigt ein Diagramm des Kernanteils der Laserleistung eines geformten Bearbeitungs-Laserstrahls für die Erfindung während des Laserschweißens zweier Stableiter als Funktion der Zeit;
- Fig. 8a: zeigt ein experimentelles Bild direkt nach dem Ende des Laserschweißens von zwei aluminiumhaltigen Stableitern unter Bedingungen, bei denen eine Oxidhaut einer Schweißperle wiederholt aufgerissen wird und sich eine ungleichmäßige Schweißperle ausbildet;
- Fig. 8b: zeigt ein experimentelles Bild direkt nach dem Ende des Laserschweißens von zwei aluminiumhaltigen Stableitern unter Bedingungen des erfindungsgemäßen Verfahrens, bei denen eine Oxidhaut einer Schweißperle in einem Mantelbereich unverletzt bleibt und sich eine gleichmäßige Schweißperle ausbildet.

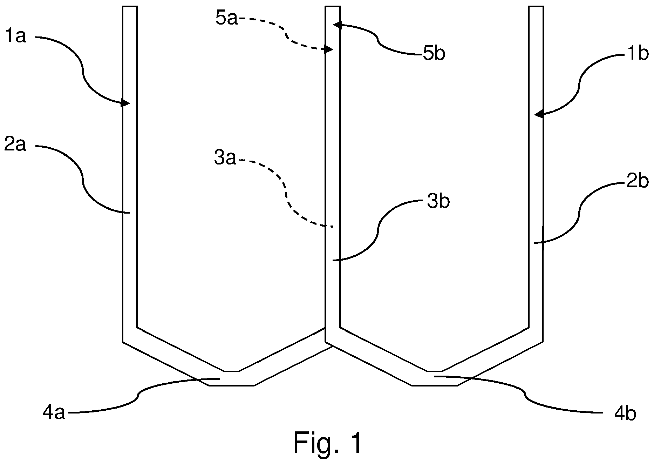

Die **Fig. 1** zeigt in einer schematischen Seitenansicht zwei aluminiumhaltige, gebogene Stableiter 1a, 1b. Die Stableiter 1a, 1b sind als so genannte Hairpins ausgebildet, die zur Fertigung einer elektrodynamischen Maschine genutzt werden, etwa eines Elektromotors oder eines elektrischen Generators. Die Stableiter 1a, 1b sind jeweils näherungsweise U-förmig ausgebildet und verfügen jeweils über zwei Beine 2a, 3a und 2b, 3b sowie einen Mittelteil 4a, 4b, der die jeweiligen Beinpaare miteinander verbindet.

Die Stableiter 1a, 1b sollen elektrisch leitfähig miteinander verbunden werden. Dafür werden die Stableiter 1a, 1b an ihren Endbereichen 5a, 5b erfindungsgemäß miteinander verschweißt. Für das Verschweißen werden das Bein 3a des ersten Stableiters 1a und das Bein 3b des zweiten Stableiters 1b überlappend und in der hier gezeigten Variante aneinander anliegend angeordnet.

Für die Stableiter 1a, 1b werden aluminiumhaltige Stableitermaterialien genutzt, welche einen Gehalt von wenigstens 75 Gew% Aluminium, bevorzugt wenigstens 90 Gew% Aluminium aufweisen. Als mögliche aluminiumhaltige Stableitermaterialen kommen beispielsweise Aluminium-Legierungsgruppen der 1.000er- bis 6.000er-Reihe in Betracht (z. B. Werkstoff EN AW-1050A).

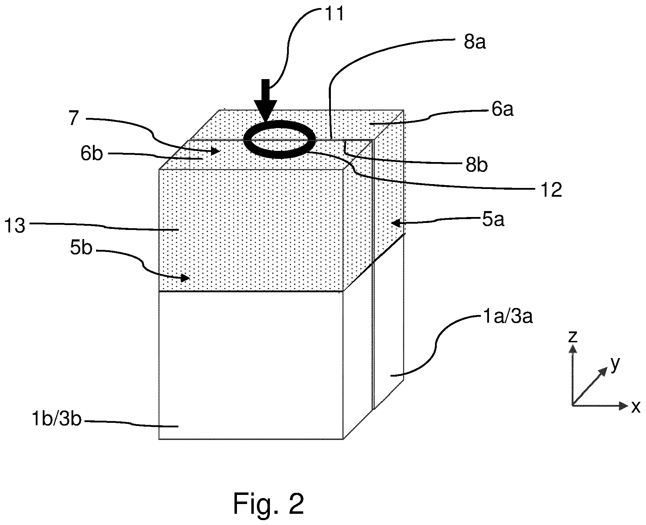

Die **Fig.** 2 zeigt in einer schematischen Schrägansicht die Endbereiche 5a, 5b der Stableiter 1a, 1b vor Beginn des erfindungsgemäßen Laserschweißens. Das Koordinatensystem ist so gewählt, dass die x-Achse nach rechts, die y-Achse in die Zeichenebene und die z-Achse nach oben zeigt. Die stirnseitigen Endflächen 6a, 6b der beiden Stableiter 1a, 1b liegen dabei auf ungefähr gleicher Höhe und sind horizontal ausgerichtet. Zusammen bilden die stirnseitigen Endflächen 6a, 6b der beiden Stableiter 1a, 1b eine gemeinsame Basisfläche 7. Die Endbereiche 5a, 5b der Stableiter 1a, 1b weisen in der xy-Ebene jeweils einen rechteckigen Querschnitt auf. Die langen Seiten 8a, 8b der Querschnitte der Stableiter 1a, 1b in den Endbereichen 5a, 5b der Beine 3a, 3b sind aneinander anliegend angeordnet, wobei die Beine 3a, 3b aneinander gepresst werden (nicht näher dargestellt). Die Beine 3a, 3b sind vertikal ausgerichtet und liegen parallel zueinander, so dass die beiden Endflächen 6a, 6b und damit die gemeinsame Basisfläche 7 nach oben ausgerichtet ist.

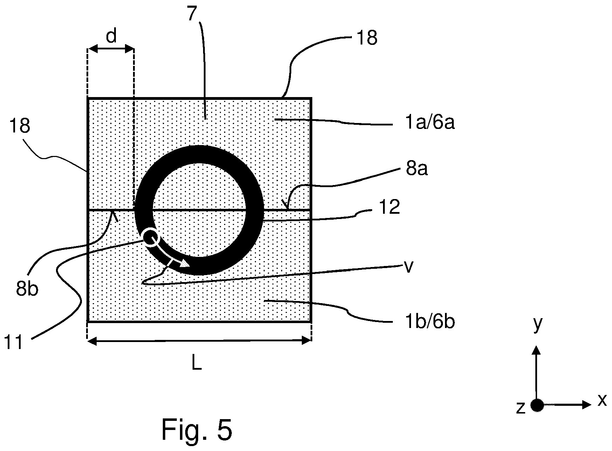

Die beiden Endbereiche 5a, 5b sollen durch Einsatz eines Bearbeitung-Laserstrahls 11 verschweißt werden. Dazu wird eine Schweißkontur 12 auf der gemeinsamen Basisfläche 7 festgelegt, die dann mehrfach durch den Bearbeitungs-Laserstrahl 11 durchfahren werden soll. In der hier gezeigten Ausführungsform ist die Schweißkontur 12 ellipsenförmig gewählt. Es ist auch möglich, linienförmige Schweißkonturen (hier nicht gezeigt) oder kreisförmige Schweißkonturen (siehe Fig. 5) zu wählen, je nachdem, wie die Stableiter dimensioniert sind und was die etwaigen Anforderungen an eine Verschweißung sind. Der gepunktete Bereich 13 zeigt den Bereich der Stableiter 1a, 1b, der durch Einwirkung des Bearbeitungs-Laserstrahls 11 geschmolzen werden soll. In einer vorteilhaften Ausführungsform kann die Strahlführung des Bearbeitungs-Laserstrahls 11 entlang der Schweißkontur 12 über eine Scanneroptik erfolgen (nicht näher dargestellt).

Der Bearbeitungs-Laserstrahl 11 trifft näherungsweise senkrecht auf die gemeinsame Basisfläche 7. Hierbei ist zu beachten, dass während der Fertigung verschiedener Paare von Stableitern 1a, 1b der Einfallswinkel des Bearbeitungs-Laserstrahls 11 typischerweise leicht variieren kann, um die Stableiter 1a, 1b, die meist in einem Statorträger (nicht näher dargestellt) angeordnet sind, nicht zu häufig versetzen zu müssen. Der Bearbeitungs-Laserstrahl 11 weicht typischerweise nicht mehr als 40° von einem senkrechten Einfall auf die Basisfläche 7 ab, bevorzugt nicht mehr als 20°.

Die Laserleistung P des Bearbeitungs-Laserstrahls 11 kann so gewählt werden, dass 0,5 kW ≤ P ≤ 20 kW, bevorzugt, 2 kW ≤ P ≤ 10 kW, besonders bevorzugt 4 kW ≤ P ≤ 8 kW, gilt. Hiermit lassen sich in der Praxis gute Ergebnisse erzielen. Beispielsweise kann zum Verschweißen zweier aluminiumhaltiger Stableiter 1a, 1b eine Leistung P von 6 kW genutzt werden. Die Wellenlänge des Bearbeitungs-Laserstrahls 11 kann zwischen 400 nm und 1.200 nm liegen. Beispiele hierfür sind Wellenlängen von 450 nm (blau), 515 nm (grün), 900 ± 100 nm (Diode, NIR), 1030 nm (NIR), 1064 nm (NIR) und 1070 nm (NIR).

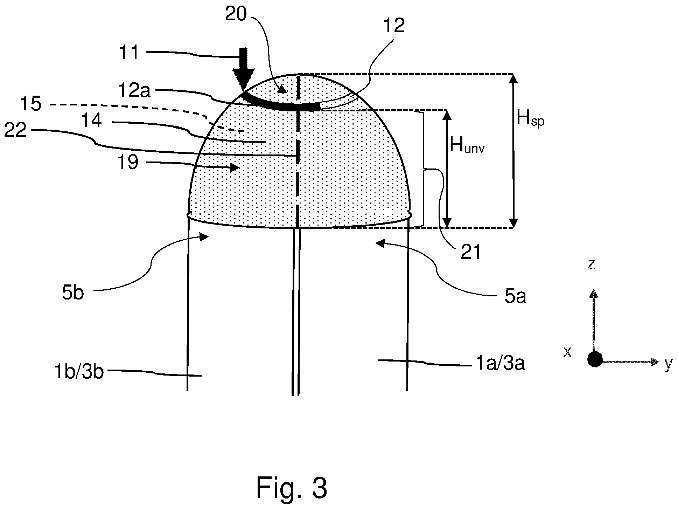

**Fig. 3** zeigt in einer schematischen Seitenansicht die beiden Stableiter 1a, 1b von Fig. 2 mitsamt einer Schweißperle 19 in der zweiten Hälfte des erfindungsgemäßen Laserschweißens. Das Koordinatensystem ist so gewählt, dass die x-Achse aus der Zeichenebene, die y-Achse nach rechts und die z-Achse nach oben zeigt. Zu sehen sind die Endbereiche 5a, 5b der Stableiter 1a, 1b während des Laserschweißens, an deren hier oberen Enden sich eine Schweißperle 19 bildet.

Der Bearbeitungs-Laserstrahl 11 ist dabei, die Schweißkontur 12 abzufahren, die an einer oberen Stirnseite 20 der Schweißperle 19 liegt. Hierdurch wird Wärme in das aluminiumhaltige Stableitermaterial eingebracht. Dabei bildet und sammelt sich unterhalb einer nicht-flüssigen Oxidhaut 14 ein flüssiges Stableitermaterial 15 (Bezugslinie gestrichelt, da das flüssige Stableitermaterial 15 unter der nicht-flüssigen Oxidhaut 14 weitestgehend verdeckt ist), also eine aluminiumhaltige Schmelze. Die nicht-flüssige Oxidhaut 14 bildet dann die Begrenzung der Schweißperle 19 und sorgt dafür, dass die Form des flüssigen Stableitermaterials 15 erhalten bleibt und ein Verlaufen des flüssigen Stableitermaterials 15 verhindert wird. Die nicht-flüssige Oxidhaut 14 wird durch den Bearbeitungs-Laserstrahl 11 lokal aufgebrochen, wobei der Bearbeitungs-Laserstrahl 11 in der gezeigten Variante entlang der Schweißkontur 12 eine aufgebrochene Spur 12a hinterlässt. Hierdurch wird im aufgebrochenen Bereich entlang der Spur 12a kurzzeitig flüssiges Stableitermaterial 15 freigelegt. Hinter dem Bearbeitungs-Laserstrahl 11 beginnt das flüssige Stableitermaterial 15 wieder zu oxidieren, so dass sich neue Oxidhaut 14 bildet und sich die Spur 12a wieder verschließt. In der gezeigten Variante erstreckt sich die Spur 12a über ca. 1/3 des Umfangs der Schweißkontur 12, bevor sie wieder vollständig mit nicht-flüssiger Oxidhaut 14 zugewachsen ist. Das erfindungsgemäße Verfahren findet typischerweise in einer sauerstoffhaltigen Atmosphäre (z. B. Luft) statt, so dass sich durch Oxidation nicht-flüssige Oxidhaut 14 im aufgebrochenen Bereich besonders schnell wieder ausbilden kann.

Die nicht-flüssige Oxidhaut 14 erstreckt sich in einem Mantelbereich 21 der Schweißperle 19 von der oberen Stirnseite 20 bis nach unten zu den noch festen Endbereichen 5a, 5b der Stableiter 1a, 1b und um die gesamte Schweißperle 19 herum. In der hier gezeigten Variante wird die nicht-flüssige Oxidhaut 14 entlang der vom Bearbeitungs-Laserstrahl 11 abgefahrenen Schweißkontur 12 im Bereich der Spur 12a (schwarz dargestellt) aufgebrochen. Das freigelegte flüssige Stableitermaterial 15 wird durch die sauerstoffhaltige Atmosphäre wieder oxidiert (nichtausgefüllter Bereich von Schweißkontur 12 in Fig. 5). Die nicht-flüssige Oxidhaut 14 der oberen Stirnseite 20 bleibt in der hier gezeigten Variante unverletzt. In anderen Varianten ist es auch möglich, dass der Innenbereich der Schweißkontur 12 insgesamt aufgebrochen wird und während des Schweißverfahrens im Wesentlichen aufgebrochen bleibt (hier nicht gezeigt).

Die Schweißperle 19 weist in z-Richtung (entlang der Erstreckungsrichtung der Endbereiche 5a, 5b der Stableiter 1a, 1b) eine gesamte Höhe Hₛₚ auf, und der Mantelbereich 21 der Schweißperle 19, in welchem die nicht-flüssige Oxidhaut 14 unverletzt bleibt, weist eine Höhe Hᵤₙᵥ auf. Die Höhe Hᵤₙᵥ erstreckt sich in der Regel vom unteren Ende der Schweißperle 19 bis zu dem Bereich, in dem der Bearbeitungs-Laserstrahl 11 die Schweißkontur 12 abfährt. Da der Bearbeitungs-Laserstrahl 11 die nicht-flüssige Oxidhaut 14 partiell aufbricht und somit flüssiges Stableitermaterial 15 freilegt, wird der Bereich der oberen Stirnseite 20, der innerhalb der Schweißkontur 12 liegt, nicht mehr als unverletzter Teil des Mantelbereichs 21 angesehen. In der hier gezeigten Variante erstreckt sich Hᵤₙᵥ über ungefähr 4/5 der Höhe von Hₛₚ. Es hat sich als vorteilhaft gezeigt, dass sich die Höhe Hᵤₙᵥ über wenigstens 3/4 der Höhe von Hₛₚ, bevorzugt über wenigstens 9/10 der Höhe von Hₛₚ, erstrecken sollte, damit sich eine definierte Schweißperle 19 ausbilden kann. In vielen Anwendungsfällen, bei an der Stirnseite 20 weitgehend flach ausgebildeter Schweißperle 19, erstreckt sich Hᵤₙᵥ über praktisch die gesamte Höhe Hₛₚ (nicht näher dargestellt).

Am Ende des Verschweißens, nach dem Ende der Einwirkung des Bearbeitungs-Laserstrahls 11, kühlt das flüssige Stableitermaterial 15 ab, wobei es weiter von der nicht-flüssigen Oxidhaut 14 in Form gehalten wird und schließlich erstarrt. Die Stableiter 1a, 1b sind dann über die Schweißperle 19 elektrisch leitfähig miteinander verbunden. Dabei sitzt die Schweißperle 19 auf beiden Stableitern 1a, 1b auf und bedeckt diese an deren Enden flächig. Die Qualität der elektrisch leitfähigen Verbindung der beiden Stableiter 1a, 1b wird durch eine verbundene Querschnittsfläche 22 wesentlich bestimmt. Bei der verbundenen Querschnittsfläche 22 handelt es sich um die Fläche, durch welche hindurch eine elektrische Stromleitung vom ersten Stableiter 1a in den zweiten Stableiter 1b ermöglicht wird. Die verbundene Querschnittsfläche 22 entspricht bei der in Fig. 3 gezeigten, wohldefinierten Schweißperle 19 der Schnittfläche der Schweißperle 19 in der Kontaktebene der aneinander anliegenden, langen Seiten der Beine 3a, 3b, der Stableiter 1a, 1b.

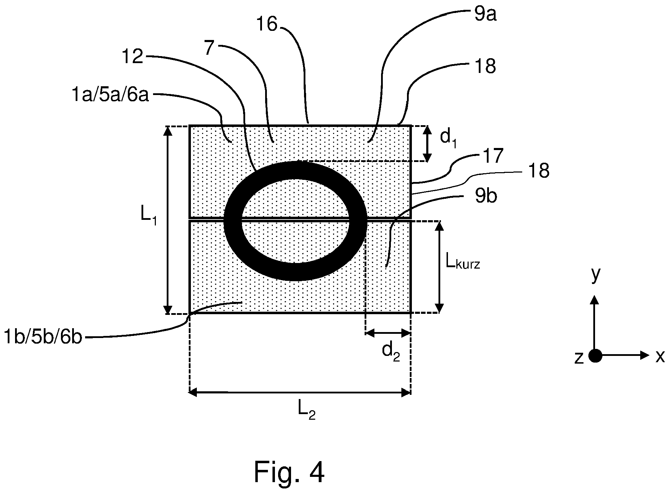

**Fig. 4** zeigt eine schematische Aufsicht auf die Endflächen 6a, 6b der beiden Stableiter 1a, 1b von Fig. 2. Das Koordinatensystem ist so gewählt, dass die x-Achse nach rechts und die y-Achse nach oben zeigt, und die z-Achse ragt aus der Zeichenebene heraus. Die stirnseitigen Endflächen 6a, 6b bilden die gemeinsame Basisfläche 7, auf der die ellipsenförmige Schweißkontur 12 gezeigt ist. Die Stableiter 1a, 1b bilden in den Endbereichen 5a, 5b jeweils einen rechteckigen Querschnitt 9a, 9b aus, entsprechend jeweils der hier sichtbaren Endfläche 6a, 6b. In der vorliegenden Variante sind die rechteckigen Querschnitte 9a, 9b in den Endbereichen 5a, 5b der beiden Stableiter 1a, 1b gleich. In der Praxis liegen die Kantenlängen der Querschnitte 9a, 9b meist zwischen 0,2 mm und 10 mm, bevorzugt zwischen 1 mm und 8 mm, besonders bevorzugt zwischen 2 mm und 6 mm.

Die rechteckigen stirnseitigen Endflächen 6a, 6b haben jeweils eine lange Kantenlänge L₂ und eine kurze Kantenlänge L_{kurz}. Die gemeinsame Basisfläche 7 wird durch eine lange Kantenlänge L₂ und eine doppelte kurze Kantenlänge L₁ beschrieben. Man beachte, dass in Fig. 3 zwischen den stirnseitigen Endflächen 6a, 6b zur besseren Anschaulichkeit eine schmale Lücke gezeigt ist. In der Praxis liegen die Stableiter 1a, 1b aneinander an, so dass der Abstand praktisch null ist, und somit 2*L_{kurz} = L₁.

Der kleinste Abstand, der zwischen der Schweißkontur 12 zum äußeren Rand 18 der gemeinsamen Basisfläche 7 in Richtung (entlang) einer kurzen Kante 17 liegt, wird als ein kleinster Abstand d₁ bezeichnet. Der kleinste Abstand, der zwischen der Schweißkontur 12 zum äußeren Rand 18 der gemeinsamen Basisfläche 7 in Richtung (entlang) einer langen Kante 16 liegt, wird als ein kleinster Abstand d₂ bezeichnet. In der Praxis hat sich gezeigt, dass die Mantelfläche der nicht-flüssigen Oxidhaut während des Verschweißens in der Regel unverletzt bleibt, wenn d₁ zwischen 20% und 40% der Länge von L₁, bevorzugt zwischen 25% und 35% der Länge von L₁, gewählt wird, und d₂ zwischen 20% und 40% der Länge von L₂, bevorzugt zwischen 25% und 35% der Länge von L₂, gewählt wird.

**Fig. 5** zeigt eine schematische Aufsicht auf die stirnseitigen Endflächen 6a, 6b der beiden Stableiter 1a, 1b ähnlich wie in Fig. 4 dargestellt, in einer Variante, in der die gemeinsame Basisfläche 7 quadratisch ausgebildet ist. Das Koordinatensystem ist so gewählt, dass die x-Achse nach rechts und die y-Achse nach oben zeigt, und die z-Achse aus der Zeichenebene herausragt. Die stirnseitigen Endflächen 6a, 6b liegen schlüssig an den langen Kanten 8a, 8b aneinander an. Der kleinste Abstand, der zwischen der kreisförmigen Schweißkontur 12 und einem äußeren Rand 18 der gemeinsamen Basisfläche 7 liegt, wird als ein kleinster Abstand d bezeichnet. Die gemeinsame Basisfläche 7 hat eine Erstreckung L entlang der Richtung, in der der kleinste Abstand d liegt. In der hier gezeigten Variante gilt ca. d=0,25*L. In der Praxis kann der kleinste Abstand d der Schweißkontur 12 von einem äußeren Rand 18 der gemeinsamen Basisfläche 7 so gewählt werden, dass d ≥15% der Länge von L, bevorzugt ≥20% der Länge von L, besonders bevorzugt ≥25% der Länge von L, beträgt. Dadurch wird die Gefahr eines Aufreißens der nicht-flüssigen Oxidhaut im Mantelbereich während des Verschweißens minimiert. Wird beispielsweise ein Paar von Stableitern 1a, 1b mit einer Erstreckung von L = 4 mm gewählt (was einer in der Praxis gängigen Dimensionierung entspricht), kann der kleinste Abstand d ≥0,6 mm, bevorzugt ≥0,8 mm, besonders bevorzugt ≥ 1 mm betragen.

In Fig. 5 wird weiterhin der Bearbeitung-Laserstrahl 11 auf der Schweißkontur 12 angedeutet, der die Schweißkontur 12 mit einer Vorschubgeschwindigkeit v abfährt. In der Praxis hat sich gezeigt, dass für den Bearbeitungs-Laserstrahl 11 die Vorschubgeschwindigkeit v vorteilhaft so gewählt werden kann, dass v ≤ 1600 mm/s, bevorzugt v ≤ 1200 mm/s, besonders bevorzugt v ≤ 800 mm/s, ist. Bei einer so gewählten Vorschubgeschwindigkeit v (z. B. 800 mm/s) ist die Dynamik im flüssigen Stableitermaterial innerhalb der nicht-flüssigen Oxidhaut gering, und die Gefahr einer Bildung von Rissen im Mantelbereich der nicht-flüssigen Oxidhaut ist besonders gering.

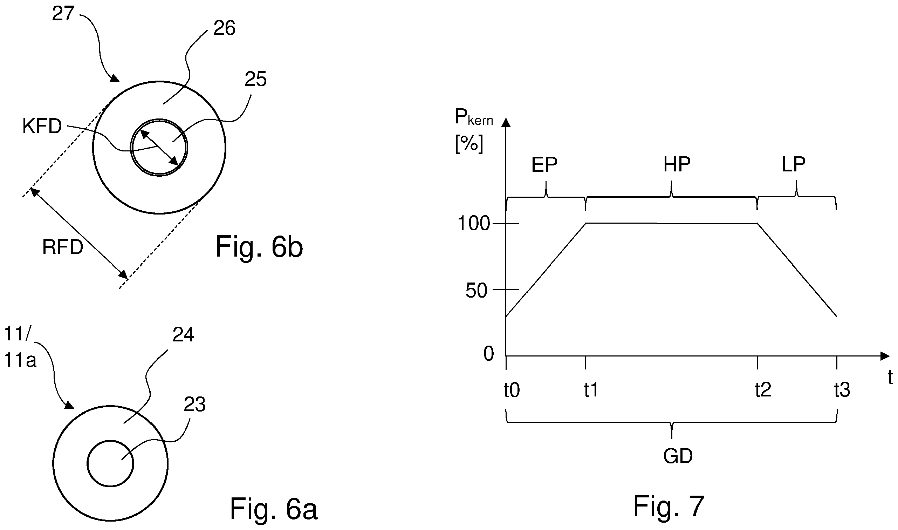

Im Rahmen des erfindungsgemäßen Laserschweißens ist es vorteilhaft, den Bearbeitungs-Laserstrahl 11 als einen geformten Laserstrahl 11a zu wählen, der zumindest zeitweise einen Kernanteil 23 und einen Ringanteil 24 aufweist. **Fig. 6a** zeigt beispielhaft einen Strahlquerschnitt eines solchen geformten Laserstrahls 11a. Der Ringanteil 24 umgibt dabei den Kernanteil 23. Hiermit lassen sich Schweißfehler insbesondere zu Beginn des Verschweißens und zum Ende des Verschweißens verringern.

Der geformte Laserstrahl 11a wird beispielsweise durch eine 2-in-1 Faser 27 erzeugt; **Fig. 6b** zeigt einen Querschnitt einer beispielhaften 2-in-1 Faser 27, mit der ein geformter Laserstrahl für das erfindungsgemäße Laserschweißen bereit gestellt werden kann. Die 2-in-1 Faser 27 weist eine Kernfaser 25 und eine sie umgebende Ringfaser 26 auf. Für den Kernfaserdurchmesser KFD einer solchen 2-in-1 Faser 27 kann beispielsweise 11 µm ≤ KFD ≤ 300 µm, bevorzugt 50 µm ≤ KFD ≤ 100 µm, und für den Ringfaserdurchmesser RFD einer solchen 2-in-1 Faser 27 kann beispielsweise 50 µm ≤ RFD ≤ 1000 µm, bevorzugt 200 µm ≤ RFD ≤ 400 µm, gewählt werden.

Ein Leistungsanteil Pₖₑᵣₙ im Kernanteil und ein Leistungsanteil P_{ring} im Ringanteil kann dadurch eingestellt werden, dass ein Ursprungslaserstrahl teilweise in die Kernfaser 25 und teilweise in die Ringfaser 26 eingespeist wird, beispielsweise über einen teilweise in den Ursprungslaserstrahl eingeschobenen optischen Keil (nicht näher dargestellt). Im Rahmen der Erfindung kann die Leistungsaufteilung zwischen Kernanteil und Ringanteil über die Gesamtschweißdauer des Laserschweißens der Stableiter konstant gewählt werden, oder auch variiert werden. Typischerweise liegt Pₖₑᵣₙ zwischen 20% und 100%, bevorzug zwischen 20% und 80%, besonders bevorzugt zwischen 40% und 60% einer Gesamtlaserleistung P_{ges} des Bearbeitungs-Laserstrahls. Durch Änderung der eingespeisten Anteile des Ursprungslaserstrahls in die Kernfaser 25 und die Ringfaser 26, beispielsweise durch Verschiebung des optischen Keils (nicht näher dargestellt), können die Leistungsanteile Pₖₑᵣₙ, P_{ring} variiert werden. Typischerweise wird die Gesamtlaserleistung P_{ges}=Pₖₑᵣₙ+P_{ring} über die Gesamtschweißdauer konstant gewählt.

Bei einer vorteilhaften Variante des Laserschweißens gemäß der Erfindung, die in **Fig. 7** als Diagramm des Leistungsanteils Pₖₑᵣₙ an der konstanten Gesamtleistung P_{ges} als Funktion der Zeit t illustriert ist, wird wie folgt vorgegangen:
Das Laserschweißen der beiden Stableiter umfasst einen erste Phase (Anfangphase) EP, eine Hauptphase HP und eine letzte Phase (Endphase) LP, während derer die Schweißkontur abgefahren wird (wobei z. B. mehrfach eine Ellipsenbahn oder Kreisbahn durchlaufen wird). Die Vorschubgeschwindigkeit ist dabei typischerweise konstant über die Gesamtschweißdauer GD gewählt. In der zeitlich ersten Phase EP (zwischen den Zeitpunkten t0 und t1) und in der zeitlich letzten Phase LP (zwischen den Zeitpunkten t2 und t3) des Laserschweißens der Stableiter wird ein Leistungsanteil Pₖₑᵣₙ der Laserleistung im Kern niedriger gewählt als in der dazwischenliegenden Hauptphase HP (zwischen den Zeitpunkten t1 und t2).

Beim Einstechen des geformten Laserstrahls 11a am Beginn der zeitlich ersten Phase EP (bei Zeitpunkt t0) wird durch die geringe Laserleistung im Kern Pₖₑᵣₙ die Spritzerbildung vermindert und so verhindert, dass größere Mengen nicht-flüssiger Oxidhaut (und flüssiger Schmelze) herausgeschleudert werden. Der Anteil der Laserleistung im Kern Pₖₑᵣₙ beginnt hier bei 30% und nimmt dann in der zeitlich ersten Phase EP zu (hier linear), bis er einen gewünschten Wert für die Hauptphase HP erreicht hat. Die Wahl der Dauer der ersten Phase EP kann sich beispielsweise danach richten, dass die durch den geformten Laserstrahl erzeugte Dampfkapillare eine gewisse Kapillar-Tiefe erreicht hat (z. B. 30% ihrer maximalen Kapillar-Tiefe). Die zeitlich erste Phase EP des Laserschweißens umfasst oft einen Anteil von 10 - 30% der Gesamtschweißdauer GD des Verschweißens der beiden Stableiter und kann z. B. zwischen 1 ms und 30 ms andauern.

In der Hauptphase HP (zwischen den Zeitpunkten t1 und t2) wird dann die Schweißkontur 12 mit dem gewünschten Anteil der Laserleistung im Kern Pₖₑᵣₙ weiter abgefahren. In der gezeigten Variante beträgt Pₖₑᵣₙ in der Hauptphase 100%, das heißt der Ringanteil wird nicht ausgeleuchtet; alternativ könnte beispielsweise auch Pₖₑᵣₙ zwischen 60% und 90% gewählt sein.

Nach der Hauptphase HP (ab Zeitpunkt t2) wird der Anteil der Laserleistung im Kern Pₖₑᵣₙ wieder reduziert (hier linear) bis er einen gewünschten Wert erreicht (hier wiederum 30%). Hierdurch wird erreicht, dass die Dampfkapillare, die durch den geformten Laserstrahl erzeugt wird, sich gleichmäßig zurückbildet, wodurch im abgekühlten Stableitermaterial nur wenige oder gar keine Poren erhalten werden. Die zeitlich letzte Phase LP des Laserschweißens umfasst oft einen Anteil von 10 - 30% der Gesamtschweißdauer GD des Verschweißens und kann z. B. zwischen 1 ms und 30 ms dauern.

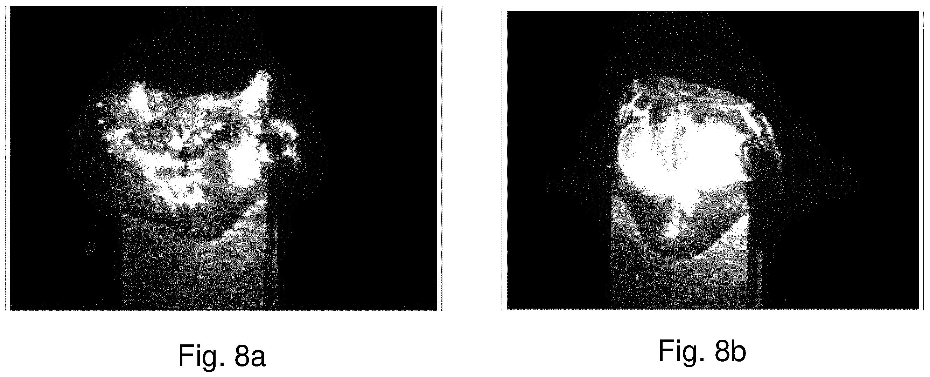

Die **Fig. 8a** zeigt ein experimentelles Bild von zwei aluminiumhaltigen Stableitern direkt nach dem Ende des Laserschweißens (also vor dem Erstarren der Schweißperle und nach Einwirkung des Bearbeitungs-Laserstrahls), bei denen sich eine ungleichmäßige Schweißperle ausbildet. Im vorliegenden Beispiel wurde für die Vorschubgeschwindigkeit v des Bearbeitungs-Laserstrahls v = 3200 mm/s und für die Laserleistung P des Bearbeitungs-Laserstrahls P = 6kW gewählt; die Laserwellenlänge betrug 1030 nm, und die Gesamtschweißzeit 85 ms; die Stableiter waren aus der Aluminiumlegierung EN AW-1050A gefertigt, und der Querschnitt der einzelnen Hairpins betrug 2x4mm, und die Schweißkontur mit einem Kreisdurchmesser von 2mm war mittig auf den aneinander liegenden Endflächen der Hairpins. Die hohe Vorschubgeschwindigkeit v verursacht eine hohe Dynamik der Schmelze. Hierdurch wird die Oxidschicht vielfach unterbrochen und deren Zusammenhalt zerstört, und die niedrigviskose Schmelze verläuft unkontrolliert. Auf diese Weise ist es nicht möglich, eine definierte Schweißperle zu erhalten, die eine näherungsweise kugelige Form aufweist. Dies kann man in Fig. 8a an der unregelmäßig geformten Schweißperle und der ausgefransten Stirnfläche sehen.

Die **Fig. 8b** zeigt dagegen ein experimentelles Bild von zwei aluminiumhaltigen Stableitern direkt nach dem Ende des Laserschweißens (vor dem Erstarren der Schweißperle und nach Einwirkung des Bearbeitungs-Laserstrahls) unter Bedingungen des erfindungsgemäßen Verfahrens, bei denen sich eine gleichmäßige Schweißperle ausbildet. Im vorliegenden Beispiel wurde für die Vorschubgeschwindigkeit v des Bearbeitungs-Laserstrahls v = 800 mm/s und für die Laserleistung P des Bearbeitungs-Laserstrahls P = 6kW gewählt; die Laserwellenlänge betrug 1030 nm, und die Gesamtschweißzeit 85 ms; die Stableiter waren aus der Aluminiumlegierung EN AW-1050A gefertigt, und der Querschnitt der einzelnen Hairpins betrug 2x4mm, und die Schweißkontur mit einem Kreisdurchmesser von 2mm war mittig auf den aneinander liegenden Endflächen der Hairpins. Bei der hier gewählte Vorschubgeschwindigkeit v bleibt die nicht-flüssige Oxidhaut im Mantelbereich bei der Bearbeitung durch den Bearbeitungs-Laserstrahl unverletzt erhalten. Lediglich in der Spur des Bearbeitungs-Laserstrahl wird die nicht-flüssige Oxidhaut partiell aufgebrochen. Auf diese Weise lässt sich eine definierte Schweißperle mit einer intakten nicht-flüssigen Oxidhaut und näherungsweise kugeliger Form erhalten, wie in Fig. 8b gut zu erkennen ist.

### Bezugszeichenliste

- 1a, 1b: Stableiter
- 2a, 2b: (äußeres) Bein
- 3a, 3b: (inneres) Bein
- 4a, 4b: Mittelteil
- 5a, 5b: Endbereich
- 6a, 6b: stirnseitige Endfläche
- 7: gemeinsame Basisfläche
- 8a, 8b: lange Seite
- 9a, 9b: Querschnitt
- 11: Bearbeitungs-Laserstrahl
- 11a: geformter Laserstrahl
- 12: Schweißkontur
- 13: Bereich
- 14: nicht-flüssige Oxidhaut
- 15: flüssiges Stableitermaterial
- 16: lange Kante
- 17: kurze Kante
- 18: äußerer Rand
- 19: Schweißperle
- 20: Stirnseite
- 21: Mantelbereich
- 22: verbundene Querschnittsfläche
- 23: Kernanteil
- 24: Ringanteil
- 25: Kernfaser
- 26: Ringfaser
- 27: 2-in-1 Faser
- d: kleinster Abstand
- d₁: kleinster Abstand (in Richtung kurze Kante)
- d₂: kleinster Abstand (in Richtung lange Kante)
- EP: erste Phase (Anfangsphase)
- HP: Hauptphase
- Hₛₚ: Höhe Schweißperle
- Hᵤₙᵥ: Höhe unverletzter Mantelbereich
- KFD: Kernfaserdurchmesser
- LP: letzte Phase (Endphase)
- L: Erstreckung (in Richtung des kleinsten Abstands d)
- L₁: doppelte kurze Kantenlänge
- L₂: lange Kantenlänge
- L_{kurz}: kurze Kantenlänge
- P: Laserleistung
- P_{ges}: Gesamtlaserleistung
- Pₖₑᵣₙ: Laserleistung im Kernanteil
- P_{ring}: Laserleistung im Ringanteil
- RFD: Ringfaserdurchmesser
- v: Vorschubgeschwindigkeit

## Patentansprüche

1. Verfahren zum Laserschweißen von Stableitern (1a, 1b), bevorzugt gebogenen Stableitern (1a, 1b), insbesondere von Hairpins für einen Elektromotor oder einen elektrischen Generator,
wobei die Stableiter (1a, 1b) aus einem aluminiumhaltigen Stableitermaterial mit einem Gehalt von wenigstens 75 Gew% Aluminium, bevorzugt wenigstens 90 Gew% Aluminium, bestehen,
wobei zwei Stableiter (1a, 1b) teilweise überlappend und nebeneinander liegend angeordnet werden und mittels eines Bearbeitungs-Laserstrahls (11) miteinander verschweißt werden, wobei sich an einer gemeinsamen Basisfläche (7) der nebeneinander liegenden Stableiter (1a, 1b) eine Schweißperle (19) ausbildet, durch die die Stableiter (1a, 1b) miteinander verbunden werden,
insbesondere wobei die gemeinsame Basisfläche (7) horizontal ausgerichtet ist,
**dadurch gekennzeichnet,**
**dass** beim Laserschweißen der Stableiter (1a, 1b) der Bearbeitungs-Laserstrahl (11) so geführt wird, und dabei eine Schweißkontur (12) des Bearbeitungs-Laserstrahls (11) relativ zu den Stableitern (1a, 1b) so platziert und eine Vorschubgeschwindigkeit v des Bearbeitungs-Laserstrahl (11) entlang der Schweißkontur (12) relativ zu den Stableitern (1a, 1b) so gewählt wird,
- **dass** während des Laserschweißens der Stableiter (1a, 1b) die Schweißperle (19) eine nicht-flüssige Oxidhaut (14) aufweist, innerhalb derer sich flüssiges Stableitermaterial (15) ansammelt,
- wobei während des Laserschweißens der Stableiter (1a, 1b) die nicht-flüssige Oxidhaut (14) lediglich an einer nach oben gerichteten Stirnseite (20) der Schweißperle (19) vom Bearbeitungs-Laserstrahl (11) entsprechend der Schweißkontur (12) partiell aufgebrochen wird,
- und wobei während des Laserschweißens der Stableiter (1a, 1b) die nicht-flüssige Oxidhaut (14) in einem Mantelbereich (21) der Schweißperle (19), der sich von der oberen Stirnseite (20) weg nach unten zu den Stableitern (1a, 1b) hin und um die gesamte Schweißperle (19) herum erstreckt, unverletzt bleibt.

2. Verfahren nach Anspruch 1, **dadurch gekennzeichnet,**
**dass** die Schweißkontur (12) des Bearbeitungs-Laserstrahls (11) relativ zu den Stableitern (1a, 1b) so platziert wird, dass für einen kleinsten Abstand d der Schweißkontur (12) von einem äußeren Rand (18) der gemeinsamen Basisfläche (7) und eine Erstreckung L der gemeinsamen Basisfläche (7) entlang der Richtung, in der der kleinste Abstand d liegt, gilt:
d≥0,15*L, bevorzugt d≥0,20*L, besonders bevorzugt d≥0,25*L.

3. Verfahren nach Anspruch 1 oder 2, **dadurch gekennzeichnet,**
**dass** die Schweißkontur (12) des Bearbeitungs-Laserstrahls (11) relativ zu den Stableitern (1a, 1b) so platziert wird, dass für einen kleinsten Abstand d der Schweißkontur (12) von einem äußeren Rand (18) der gemeinsamen Basisfläche (7) gilt:
d ≥ 0,6 mm, bevorzugt d ≥ 0,8 mm, besonders bevorzugt d ≥ 1,0 mm.

4. Verfahren nach einem der Ansprüche 1 bis 3, **dadurch gekennzeichnet, dass** für die Vorschubgeschwindigkeit v des Bearbeitungs-Laserstrahls (11) entlang der Schweißkontur (12) des Bearbeitungs-Laserstrahls (11) relativ zu den Stableitern (1a, 1b) gilt:
v ≤ 1600 mm/s, bevorzugt v ≤ 1200 mm/s, besonders bevorzugt v ≤ 800 mm/s.

5. Verfahren nach einem der vorhergehenden Ansprüche, **dadurch gekennzeichnet, dass** das Laserschweißen in einer sauerstoffhaltigen Atmosphäre stattfindet, insbesondere an Luft.

6. Verfahren nach einem der vorhergehenden Ansprüche, **dadurch gekennzeichnet, dass** zumindest in einer zeitlich zweiten Hälfte des Laserschweißens der Stableiter (1a, 1b) der Mantelbereich (21), in welchem die nicht-flüssige Oxidhaut (14) unverletzt bleibt, sich über wenigstens 3/4 der Höhe (Hₛₚ) der Schweißperle (19), bevorzugt über wenigstens 9/10 der Höhe (Hₛₚ) der Schweißperle (19), erstreckt.

7. Verfahren nach einem der vorhergehenden Ansprüche, **dadurch gekennzeichnet, dass** die zwei Stableiter (1a, 1b) mit Endbereichen (5a, 5b) parallel zueinander und aneinander liegend angeordnet werden,
insbesondere wobei die Endbereiche (5a, 5b) der Stableiter (1a, 1b) flächig aneinander gepresst werden,
dass stirnseitige Endflächen (6a, 6b) der Stableiter (1a, 1b) näherungsweise auf gleicher Höhe bezüglich der Richtung einer Längserstreckung der Endbereiche (5a, 5b) der Stableiter (1a, 1b) liegen,
und dass der Bearbeitungs-Laserstrahl (11) auf die stirnseitigen Endflächen (6a, 6b) der Stableiter (1a, 1b) gerichtet wird, und somit die stirnseitigen Endflächen (6a, 6b) die gemeinsame Basisfläche (7) bereitstellen, an der sich die Schweißperle (19) ausbildet.

8. Verfahren nach Anspruch 7, **dadurch gekennzeichnet, dass** die Endbereiche (5a, 5b) der Stableiter (1a, 1b) näherungsweise vertikal nach oben gerichtet sind,
insbesondere wobei die stirnseitigen Endflächen (6a, 6b) näherungsweise horizontal ausgerichtet sind.

9. Verfahren nach einem der vorhergehenden Ansprüche, **dadurch gekennzeichnet,**
**dass** die Stableiter (1a, 1b) zumindest nahe der gemeinsamen Basisfläche (7), insbesondere in einem jeweiligen Endbereich (5a, 5b), jeweils einen rechteckigen Querschnitt (9a, 9b) mit Kantenlängen (L_{kurz}, L₂) zwischen 0,2 mm und 10 mm, bevorzugt zwischen 1 mm und 8 mm, besonders bevorzugt zwischen 2 mm und 6 mm, aufweisen,
insbesondere wobei bei einem jeweiligen Stableiter (1a, 1b) eine lange Kantenlänge L₂ doppelt so groß ist wie eine kurze Kantenlänge L_{kurz} und die Querschnitte (9a, 9b) der beiden Stableiter (1a, 1b), die verschweißt werden, gleich sind.

10. Verfahren nach Anspruch 9, **dadurch gekennzeichnet, dass** ein kleinster Abstand d₂ der Schweißkontur (12) zum äußeren Rand (18) der gemeinsamen Basisfläche (7) in Richtung einer jeweiligen langen Kante (16) zwischen 20% und 40%, bevorzugt zwischen 25% und 35%, der zugehörigen langen Kantenlänge L₂ beträgt, und ein kleinster Abstand d₁ der Schweißkontur (12) zum äußeren Rand (18) der gemeinsamen Basisfläche (7) in Richtung einer jeweiligen kurzen Kante (17) zwischen 20% und 40%, bevorzugt zwischen 25% und 35%, der doppelten kurzen Kantenlänge L₁ beträgt.

11. Verfahren nach einem der vorhergehenden Ansprüche, **dadurch gekennzeichnet,**
**dass** der Bearbeitungs-Laserstrahl (11) eine Laserleistung P aufweist, mit 0,5 kW ≤ P ≤ 20 kW,
bevorzugt 2 kW ≤ P ≤ 10 kW,
besonders bevorzugt 4 kW ≤ P ≤ 8 kW,
und/oder dass eine Wellenlänge des Bearbeitungs-Laserstrahls (11) zwischen 400 nm und 1200 nm beträgt.

12. Verfahren nach einem der vorhergehenden Ansprüche, **dadurch gekennzeichnet, dass** die Schweißkontur (12) linienförmig, kreisförmig oder elliptisch gewählt ist und während des Laserschweißens der Stableiter (1a, 1b) mehrfach durchlaufen wird,
insbesondere wobei die Schweißkontur (12) mit einer Scanneroptik erzeugt wird.

13. Verfahren nach einem der vorhergehenden Ansprüche, **dadurch gekennzeichnet, dass** als Bearbeitungs-Laserstrahl (11) zumindest zeitweise ein geformter Laserstrahl (11a) mit einem Kernanteil (23) und einem Ringanteil (24), der den Kernanteil (23) ringförmig umgibt, gewählt ist,
insbesondere wobei der geformte Laserstrahl (11a) mit einer 2-in-1 Faser (27) erzeugt wird mit einem Kernfaserdurchmesser KFD mit 11 µm ≤ KFD ≤ 300 µm, bevorzugt 50 µm ≤ KFD ≤ 100 µm, und mit einem Ringfaserdurchmesser RFD mit 50 µm ≤ RFD ≤ 1000 µm, bevorzugt 200 µm ≤ RFD ≤ 400 µm.

14. Verfahren nach Anspruch 13, **dadurch gekennzeichnet, dass** während einer zeitlich ersten Phase (EP) des Laserschweißens der Stableiter (1a, 1b) ein Leistungsanteil Pₖₑᵣₙ der Laserleistung im Kernanteil (23) geringer gewählt ist als während einer Hauptphase (HP) des Laserschweißens der Stableiter (1a, 1b),
insbesondere wobei der Leistungsanteil Pₖₑᵣₙ der Laserleistung im Kernanteil (23) während der ersten Phase (EP) kontinuierlich zunimmt,
insbesondere wobei die erste Phase (EP) eine Dauer zwischen 1 ms und 30 ms hat.

15. Verfahren nach Anspruch 13 oder 14, **dadurch gekennzeichnet, dass** während einer zeitlich letzten Phase (LP) des Laserschweißens der Stableiter (1a, 1b) ein Leistungsanteil Pₖₑᵣₙ der Laserleistung im Kernanteil (23) geringer ist als während einer Hauptphase (HP) des Laserschweißens der Stableiter (1a, 1b),
insbesondere wobei der Leistungsanteil Pₖₑᵣₙ der Laserleistung im Kernanteil (23) während der letzten Phase (LP) kontinuierlich abnimmt,
insbesondere wobei die letzte Phase (LP) eine Dauer zwischen 1 ms und 30 ms hat.

## Claims

1. A method for the laser welding of rod conductors (1a, 1b), preferably curved rod conductors (1a, 1b), in particular hairpins for an electric motor or an electric generator,
wherein the rod conductors (1a, 1b) consist of a rod conductor material containing aluminum with a content of at least 75 wt.% aluminum, preferably at least 90 wt.% aluminum,
wherein two rod conductors (1a, 1b) are arranged partially overlapping and adjacent to one another and are welded to one another by means of a processing laser beam (11), wherein a welding bead (19) is formed on a common base surface (7) of the adjacent rod conductors (1a, 1b), by means of which the rod conductors (1a, 1b) are connected to one another,
in particular wherein the common base surface (7) is oriented horizontally, **characterized in that**,
during the laser welding of the rod conductors (1a, 1b), the processing laser beam (11) is guided in such a way that a welding contour (12) of the processing laser beam (11) is positioned relative to the rod conductors (1a, 1b) and a feed rate v of the processing laser beam (11) along the welding contour (12) relative to the rod conductors (1a, 1b) is selected in such a way,
- that during the laser welding of the rod conductors (1a, 1b), the welding bead (19) has a non-liquid oxide skin (14), within which liquid rod conductor material (15) accumulates,
- wherein during the laser welding of the rod conductors (1a, 1b), the non-liquid oxide skin (14) is only partially broken up by the processing laser beam (11) corresponding to the welding contour (12) on a front side (20) of the welding bead (19) which points upwards,
- and wherein during the laser welding of the rod conductors (1a, 1b) the non-liquid oxide skin (14) remains undamaged in a sheath region (21) of the welding bead (19), which extends away from the upper front side (20) downwards towards the rod conductors (1a, 1b) and around the entire welding bead (19).

2. The method according to claim 1, **characterized in that**
the welding contour (12) of the processing laser beam (11) is positioned relative to the rod conductors (1a, 1b) in such a way that the following applies for a smallest distance d of the welding contour (12) from an outer edge (18) of the common base surface (7) and an extension L of the common base surface (7) along the direction in which the smallest distance d lies:
d≥0.15*L, preferably d≥0.20*L, in particular preferably d≥0.25*L.

3. The method according to claim 1 or 2, **characterized in that**
the welding contour (12) of the processing laser beam (11) is positioned relative to the rod conductors (1a, 1b) in such a way that the following applies for a smallest distance d of the welding contour (12) from an outer edge (18) of the common base surface (7):
d ≥ 0.6 mm, preferably d ≥ 0.8 mm, in particular preferably d ≥ 1.0 mm.

4. The method according to one of claims 1 to 3, **characterized in that** the following applies to the feed rate v of the processing laser beam (11) along the welding contour (12) of the processing laser beam (11) relative to the rod conductors (1a, 1b):
v ≤ 1600 mm/s, preferably v ≤ 1200 mm/s, in particular preferably v ≤ 800 mm/s.

5. The method according to one of the preceding claims, **characterized in that** the laser welding takes place in an atmosphere containing oxygen, in particular in air.

6. The method according to one of the preceding claims, **characterized in that**, at least during a time-related second half of the laser welding of the rod conductors (1a, 1b), the sheath region (21), in which the non-liquid oxide skin (14) remains undamaged, extends over at least 3/4 of the height (Hₛₚ) of the welding bead (19), preferably over at least 9/10 of the height (Hₛₚ) of the welding bead (19).

7. The method according to one of the preceding claims, **characterized in that** the two rod conductors (1a, 1b) are arranged with end regions (5a, 5b) parallel to each other and arranged so as to lie together,
in particular wherein the end regions (5a, 5b) of the rod conductors (1a, 1b) are pressed together over their entire surface,
**in that** front side end surfaces (6a, 6b) of the rod conductors (1a, 1b) are approximately at the same height with respect to the direction of a longitudinal extension of the end regions (5a, 5b) of the rod conductors (1a, 1b),
and **in that** the processing laser beam (11) is directed onto the front side end surfaces (6a, 6b) of the rod conductors (1a, 1b), and thus the front side end surfaces (6a, 6b) provide the common base surface (7) on which the welding bead (19) is formed.

8. The method according to claim 7, **characterized in that** the end regions (5a, 5b) of the rod conductors (1a, 1b) are directed approximately vertically upwards,
in particular wherein the front side end surfaces (6a, 6b) are oriented approximately horizontally.

9. The method according to one of the preceding claims, **characterized in that**,
the rod conductors (1a, 1b) each have a rectangular cross-section (9a, 9b) with edge lengths (Lₛₕₒᵣₜ, L₂) of between 0.2 mm and 10 mm, preferably between 1 mm and 8 mm, in particular preferably between 2 mm and 6 mm, at least close to the common base surface (7), in particular in a respective end region (5a, 5b),
in particular wherein a long edge length L₂ of a respective rod conductor (1a, 1b) is twice as large as a short edge length Lsₕₒᵣₜ and the cross-sections (9a, 9b) of the two rod conductors (1a, 1b) that are welded together are the same.

10. The method according to claim 9, **characterized in that** a smallest distance d₂ of the welding contour (12) to the outer edge (18) of the common base surface (7) in the direction of a respective long edge (16) is between 20% and 40%, preferably between 25% and 35%, of the corresponding long edge length L₂, and a smallest distance d₁ of the welding contour (12) to the outer edge (18) of the common base surface (7) in the direction of a respective short edge (17) is between 20% and 40%, preferably between 25% and 35%, of twice the short edge length L₁.

11. The method according to one of the preceding claims, **characterized in that**,
the processing laser beam (11) has a laser power P, with 0.5 kW ≤ P ≤ 20 kW, preferably 2 kW ≤ P ≤ 10 kW,
in particular preferably 4 kW ≤ P ≤ 8 kW,
and/or **in that** a wavelength of the processing laser beam (11) is between 400 nm and 1200 nm.

12. The method according to one of the preceding claims, **characterized in that** the welding contour (12) is selected to be linear, circular or elliptical and passes through the rod conductor (1a, 1b) several times during the laser welding,
in particular wherein the welding contour (12) is generated with scanner optics.

13. The method according to one of the preceding claims, **characterized in that** a shaped laser beam (11a) having a core component (23) and a ring portion (24) which surrounds the core component (23) in a ring shape is selected at least temporarily as the processing laser beam (11),
in particular wherein the shaped laser beam (11a) is generated with a 2-in-1 fiber (27) with a core fiber diameter CFD with 11 µm ≤ CFD ≤ 300 µm, preferably 50 µm ≤ CFD ≤ 100 µm, and with a ring fiber diameter RFD with 50 µm ≤ RFD ≤ 1000 µm, preferably 200 µm ≤ RFD ≤ 400 µm.

14. The method according to claim 13, **characterized in that** during a temporal first phase (FP) of the laser welding of the rod conductors (1a, 1b), a power component P_{core} of the laser power in the core component (23) is selected to be lower than during a main phase (MP) of the laser welding of the rod conductors (1a, 1b),
in particular wherein the power component P_{core} of the laser power in the core component (23) increases continuously during the first phase (FP),
in particular wherein the first phase (FP) has a duration of between 1 ms and 30 ms.

15. The method according to claim 13 or 14, **characterized in that** during a temporal last phase (LP) of the laser welding of the rod conductors (1a, 1b), a power component P_{core} of the laser power in the core component (23) is lower than during a main phase (MP) of the laser welding of the rod conductors (1a, 1b),
in particular wherein the power component P_{core} of the laser power in the core component (23) decreases continuously during the last phase (LP),
in particular wherein the last phase (LP) has a duration of between 1 ms and 30 ms.

## Revendications

1. Procédé de soudage laser de barres conductrices (1a, 1b), de préférence de barres conductrices (1a, 1b) courbées, en particulier en forme d'épingle pour un moteur électrique ou un générateur électrique,
dans lequel les barres conductrices (1a, 1b) sont constituées d'un matériau de barre conductrice contenant de l'aluminium avec une teneur d'au moins 75 % en poids d'aluminium, de préférence d'au moins 90 % en poids d'aluminium,
dans lequel deux barres conductrices (1a, 1b) sont disposées en partie en chevauchement et situées côte à côte, et soudées l'une à l'autre au moyen d'un faisceau laser de traitement (11), dans lequel une perle de soudure (19) se dessine au niveau d'une surface de base (7) commune des barres conductrices (1a, 1b) situées côte à côte, par laquelle les barres conductrices (1a, 1b) sont reliées l'une à l'autre,
en particulier dans lequel la surface de base (7) commune est orientée horizontalement,
**caractérisé en ce que**,
lors du soudage laser des barres conductrices (1a, 1b), le faisceau laser de traitement (11) est dirigé de telle sorte qu'un contour de soudure (12) du faisceau laser de traitement (11) soit placé par rapport aux barres conductrices (1a, 1b) et qu'une vitesse d'avance v du faisceau laser de traitement (11) le long du contour de soudure (12) par rapport aux barres conductrices (1a, 1b) soit sélectionnée de telle sorte que,
- pendant le soudage laser des barres conductrices (1a, 1b), la perle de soudure (19) présente une couche d'oxyde non liquide (14), à l'intérieur de laquelle du matériau de barre conductrice (15) liquide s'accumule,
- dans lequel pendant le soudage laser des barres conductrices (1a, 1b), la couche d'oxyde non liquide (14) est partiellement rompue par le faisceau laser de traitement (11) uniquement sur une face frontale (20) orientée vers le haut de la perle de soudure (19) conformément au contour de soudure (12),
- et dans lequel pendant le soudage laser des barres conductrices (1a, 1b), la couche d'oxyde non liquide (14) reste intacte dans une zone périphérique (21) de la perle de soudure (19), qui s'étend depuis la face frontale (20) supérieure vers le bas en direction des barres conductrices (1a, 1b), et autour de l'ensemble de la perle de soudure (19).

2. Procédé selon la revendication 1, **caractérisé en ce que**,
le contour de soudure (12) du faisceau laser de traitement (11) est placé par rapport aux barres conductrices (1a, 1b) de telle sorte que, pour une distance d minimale entre le contour de soudure (12) et un bord extérieur (18) de la surface de base (7) commune, et une extension L de la surface de base (7) commune le long de la direction où se situe la distance d minimale, il soit vérifié :
d≥0,15*L, de préférence d≥0,20*L, de manière encore préférentielle d≥0,25*L.

3. Procédé selon la revendication 1 ou 2, **caractérisé en ce que**,
le contour de soudure (12) du faisceau laser de traitement (11) est positionné par rapport aux barres conductrices (1a, 1b) de telle sorte que pour une distance d minimale entre le contour de soudure (12) et un bord extérieur (18) de la surface de base (7) commune il soit vérifié :
d ≥ 0,6 mm, de préférence d ≥ 0,8 mm, de manière encore préférentielle d ≥ 1,0 mm.

4. Procédé selon l'une des revendications 1 à 3, **caractérisé en ce que** pour la vitesse d'avance v du faisceau laser de traitement (11) le long du contour de soudure (12) du faisceau laser de traitement (11) par rapport aux barres conductrices (1a, 1b) il soit vérifié :
v ≤ 1600 mm/s, de préférence v ≤ 1200 mm/s, de manière encore préférentielle v ≤ 800 mm/s.

5. Procédé selon l'une des revendications précédentes, **caractérisé en ce que** le soudage laser est effectué dans une atmosphère contenant de l'oxygène, en particulier à l'air libre.

6. Procédé selon l'une des revendications précédentes, **caractérisé en ce que**, au moins dans une deuxième moitié temporelle du soudage laser des barres conductrices (1a, 1b), la zone périphérique (21), où la couche d'oxyde non liquide (14) reste intacte, s'étend sur au moins 3/4 de la hauteur (Hₛₚ) de la perle de soudure (19), de préférence sur au moins 9/10 de la hauteur (Hₛₚ) de la perle de soudure (19).

7. Procédé selon l'une des revendications précédentes, **caractérisé en ce que** les deux barres conductrices (1a, 1b) sont disposées avec leurs zones d'extrémité (5a, 5b) parallèlement l'une par rapport à l'autre et l'une contre l'autre,
en particulier dans lequel les zones d'extrémité (5a, 5b) des barres conductrices (1a, 1b) sont pressées à plat l'une contre l'autre,
les surfaces d'extrémité de face frontale (6a, 6b) des barres conductrices (1a, 1b) sont approximativement situées à la même hauteur par rapport à la direction d'une extension longitudinale des zones d'extrémité (5a, 5b) des barres conductrices (1a, 1b),
et le faisceau laser de traitement (11) est dirigé sur les surfaces d'extrémité de face frontale (6a, 6b) des barres conductrices (1a, 1b), et ainsi les surfaces d'extrémité de face frontale (6a, 6b) mettent à disposition la surface de base (7) commune sur laquelle la perle de soudure (19) se dessine.

8. Procédé selon la revendication 7, **caractérisé en ce que** les zones d'extrémité (5a, 5b) des barres conductrices (1a, 1b) sont orientées approximativement verticalement vers le haut,
en particulier dans lequel les surfaces d'extrémité de face frontale (6a, 6b) sont orientées approximativement horizontalement.

9. Procédé selon l'une des revendications précédentes, **caractérisé en ce que** les barres conductrices (1a, 1b) présentent, au moins à proximité de la surface de base (7) commune, en particulier dans une zone d'extrémité (5a, 5b) respective, respectivement une section transversale (9a, 9b) rectangulaire avec des longueurs d'arête (L_{court}, L₂) comprises entre 0,2 mm et 10 mm, de préférence entre 1 mm et 8 mm, et de manière encore préférentielle entre 2 mm et 6 mm,
en particulier dans lequel pour une barre conductrice (1a, 1b) respective, une longueur d'arête L₂ longue est deux fois plus grande qu'une longueur d'arête L_{court} courte, et les sections transversales (9a, 9b) des deux barres conductrices (1a, 1b) à souder sont identiques.

10. Procédé selon la revendication 9, **caractérisé en ce qu'**une distance d₂ minimale entre le contour de soudure (12) et le bord extérieur (18) de la surface de base (7) commune dans la direction d'une arête longue (16) respective est comprise entre 20 % et 40 %, de préférence entre 25 % et 35 %, de la longueur d'arête L₂ longue correspondante, et qu'une distance d₁ minimale entre le contour de soudure (12) et le bord extérieur (18) de la surface de base (7) commune dans la direction d'une arête courte (17) respective est comprise entre 20 % et 40 %, de préférence entre 25 % et 35 %, du double de la longueur d'arête L₁ courte.

11. Procédé selon l'une des revendications précédentes, **caractérisé en ce que** le faisceau laser de traitement (11) présente une puissance laser P, avec 0,5 kW ≤ P ≤ 20 kW,
de préférence 2 kW ≤ P ≤ 10 kW,
de manière encore préférentielle 4 kW ≤ P ≤ 8 kW,
et/ou une longueur d'onde du faisceau laser de traitement (11) est comprise entre 400 nm et 1200 nm.

12. Procédé selon l'une des revendications précédentes, **caractérisé en ce que** le contour de soudure (12) est choisi sous forme linéaire, circulaire ou elliptique, et est parcouru plusieurs fois pendant le soudage laser des barres conductrices (1a, 1b),
en particulier dans lequel le contour de soudure (12) est généré à l'aide d'une optique de scanner.

13. Procédé selon l'une des revendications précédentes, **caractérisé en ce que** le faisceau laser de traitement (11) est, au moins temporairement, un faisceau laser formé (11a) avec une partie centrale (23) et une partie annulaire (24) entourant la partie centrale (23) de manière annulaire,
en particulier dans lequel le faisceau laser formé (11a) est généré avec une fibre 2-en-1 (27) ayant un diamètre de fibre centrale KFD avec 11 µm ≤ KFD ≤ 300 µm, de préférence 50 µm ≤ KFD ≤ 100 µm, et un diamètre de fibre annulaire RFD avec 50 µm ≤ RFD ≤ 1000 µm, de préférence 200 µm ≤ RFD ≤ 400 µm.

14. Procédé selon la revendication 13, **caractérisé en ce que** pendant une première phase temporelle (EP) du soudage laser des barres conductrices (1a, 1b), une fraction de puissance P_{centrale} de la puissance laser dans la partie centrale (23) est choisie comme étant inférieure à celle pendant une phase principale (HP) du soudage laser des barres conductrices (1a, 1b),
en particulier dans lequel la fraction de puissance P_{centrale} de la puissance laser dans la partie centrale (23) augmente continuellement pendant la première phase (EP),
en particulier dans lequel la première phase (EP) a une durée comprise entre 1 ms et 30 ms.

15. Procédé selon la revendication 13 ou 14, **caractérisé en ce que** pendant une dernière phase temporelle (LP) du soudage laser des barres conductrices (1a, 1b), une fraction de puissance P_{centrale} de la puissance laser dans la partie centrale (23) est inférieure à celle pendant une phase principale (HP) du soudage laser des barres conductrices (1a, 1b),
en particulier dans lequel la fraction de puissance P_{centrale} de la puissance laser dans la partie centrale (23) diminue continuellement pendant la dernière phase (LP),
en particulier dans lequel la dernière phase (LP) a une durée comprise entre 1 ms et 30 ms.
